# EUROPÄISCHE PATENTSCHRIFT

(11) **EP 2 702 568 B1**
(45) Veröffentlichungstag und Bekanntmachung des Hinweises auf die Patenterteilung: **03.10.2018**
(21) Anmeldenummer: 12714955.7
(22) Anmeldetag: 31.03.2012
(51) Int. Cl.: G07C 9/00, B60R 25/00, B60R 25/24, B60R 16/037

(54) **VERFAHREN ZUM AKTIVIEREN EINER FUNKTION EINES FAHRZEUGS AUS EINER GROßEN ENTFERNUNG**
METHOD FOR ACTUATING A FUNCTION OF A VEHICLE FROM A LARGE DISTANCE
PROCÉDÉ POUR L'ACTIVATION À GRANDE DISTANCE D'UNE FONCTION D'UN VÉHICULE

(30) Priorität: 27.04.2011 DE 102011018749
(43) Veröffentlichungstag der Anmeldung: 05.03.2014
(73) Patentinhaber: Audi AG, 85045 Ingolstadt (DE)
(72) Erfinder: KÜBLER, Heiko, 85122 Hitzhofen (DE); DONNER, Eckart, 85051 Ingolstadt (DE)
(74) Vertreter: Brandt, Kai
(86) Internationale Anmeldenummer: PCT/EP2012/001432
(87) Internationale Veröffentlichungsnummer: WO 2012/146342

(56) Entgegenhaltungen:
- EP-A1- 1 216 900
- EP-A1- 2 264 980
- JP-A- 2005 299 119
- US-A1- 2006 294 429

## Beschreibung

Die Erfindung betrifft ein Verfahren zum Aktivieren einer Funktion eines Fahrzeugs, dem ein drahtlos Daten mit diesem austauschender Schlüssel zugeordnet ist, gegebenenfalls eine Mehrzahl von solchen Schlüsseln.

Die Funktion soll insbesondere aus einer Entfernung mit dem Verfahren aktivierbar sein, die für den Datenaustausch mit dem Schlüssel zu groß ist. Es bietet sich hier an, ein von dem Schlüssel verschiedenes (insbesondere tragbares) Telekommunikationsgerät wie z. B. ein Mobilfunktelefon einzusetzen, um dem Fahrzeug über eine Telekommunikationsverbindung (über Mobilfunk) einen Befehl zum Aktivieren der Funktion zu geben.

Beispielsweise ist denkbar, dass die zu aktivierende Funktion die Standheizung des Fahrzeugs betrifft. Der Nutzer des Fahrzeugs hat dieses an einem Flughafen abgestellt, ist an einen anderen Ort geflogen und ist gerade im Begriff, das Flugzeug zurück zum Fahrzeug zu besteigen. Er wünscht sich, dass das Fahrzeug vorgeheizt ist, wenn er wieder dort ankommt. Zum Betrieb der Standheizung muss aber gewährleistet sein, dass das Fahrzeug auf einem bestimmten Terrain steht, wo es keine Brandgefahr gibt. Es ist zu vermeiden, dass beispielsweise ein anderer Nutzer wie z. B. die Ehefrau des Nutzers das Fahrzeug wegbewegt hat, und es dann auf anderem Terrain steht, als es der Nutzer glaubt.

Will man also mit Hilfe eines Telekommunikationsgeräts, und eben nicht mit dem Fahrzeugschlüssel, eine Funktion eines Fahrzeugs aktivieren, muss für eine ausreichende Sicherheit gesorgt sein.

Aus der DE 10 2009 035 654 A1 ist es bekannt, einen Fahrzeugschlüssel mechanisch mit einem Funkmodul zu koppeln. Hierbei kann auch vorgesehen sein, dass es eine Kommunikationsverbindung zwischen dem Fahrzeugschlüssel und dem Funkmodul gibt. Bei der DE 10 2009 035 654 A1 werden jedoch sämtliche Befehle an das Fahrzeug ausschließlich durch den Fahrzeugschlüssel gegeben. Eine Aktivierung von Funktionen eines Fahrzeugs aus einer Entfernung, die für den Datenaustausch mit dem Schlüssel zu groß ist, ist daher nicht möglich.

Die EP 1 216 900 A1 beschreibt ein Fernkommunikationssystem für ein Kraftfahrzeug, wobei eine erste Kommunikationseinheit im Fahrzeug angeordnet ist und eine tragbare zweite Kommunikationseinheit, wie beispielsweise ein Schlüssel, drahtlos und kommunikativ mit einer Telekommunikationseinheit, z.B. einem Mobiltelefon, verbunden ist, über welche Daten bidirektional zwischen der tragbaren Kommunikationseinheit und der ersten Kommunikationseinheit im Fahrzeug über weite Strecken übermittelt werden können, insbesondere zur Aktivierung einer Funktion des Fahrzeugs. Darüber hinaus kann die zweite Kommunikationseinheit einen biometrischen Sensor umfassen, um einen Benutzer zu identifizieren und eine unautorisierte Fernbedienung des Kraftfahrzeugs zu verhindern. Des Weiteren können die beiden Kommunikationseinheiten eine Identifizierungseinheit umfassen. Dabei kann beispielsweise ein Identifizierungscode von der zweiten Kommunikationseinheit an die ersten Kommunikationseinheit übermittelt werden. Wird der Identifikationscode von der ersten Kommunikationseinheit akzeptiert, kann eine kommunikative Verbindung hergestellt werden. Sind dem Fahrzeug mehrere tragbare zweite Kommunikationseinheiten zugeordnet, so wird jeder tragbaren Kommunikationseinheit ein Rang zugeordnet, so dass im Falle sich widersprechender Befehle von zwei oder mehreren tragbaren Kommunikationseinheiten, derjenige der tragbaren Kommunikationseinheit mit dem höheren Rang priorisiert wird.

Die US 2006/294429 A1 beschreibt ein Verfahren zum Löschen einer zuvor durchgeführten lokalen Operation, insbesondere eine Aktivierung einer Funktion eines Fahrzeugs. Dabei werden zunächst bei einer Aktivierung einer Funktion eines Fahrzeugs durch einen Schlüssel Daten dieser Funktion, die Schlüssel-ID und Zeit und Datum der Aktivierung in einem Speicherelement, das mit dem Schlüssel verbunden ist, und in einem weiteren Speicherelement im Fahrzeug gespeichert. Wenn die aktivierte Funktion durch einen Schlüssel aus großer Entfernung deaktiviert werden soll, werden die im Schlüssel gespeicherten Informationen mit den im Fahrzeug gespeicherten Informationen verglichen und erst bei Übereinstimmung der Informationen wird die aktivierte Funktion deaktiviert. Für das Aktivieren einer Funktion wird dabei keine Vergleichsinformation eingeholt.

Die EP 2 264 980 A1 beschreibt ein Kommunikationssystem mit einer fahrzeugfesten telematischen Einheit und einem Kommunikationsgerät, das mit der telematischen Einheit in Kommunikationsverbindung steht. Dabei steht eine Mehrzahl an Kommunikationspfaden bereit, über die das Kommunikationsgerät mit der telematischen Einheit kommunizieren kann und welche eine unterschiedliche Reichweite aufweisen. Dabei kann ein geeigneter Kommunikationspfad in Abhängigkeit des Abstands des Kommunikationsgeräts von der telematischen Einheit gewählt werden. Des Weiteren kann das Kommunikationsgerät auch Sicherheitsdaten zur Autorisierung der Kommunikation zwischen dem Kommunikationsgerät und der telematischen Einheit umfassen.

Es ist die Aufgabe der vorliegenden Erfindung, eine Fernaktivierung einer Funktion eines Fahrzeugs zu ermöglichen, die ausreichend sicher ist.

Die Aufgabe wird durch ein Verfahren mit den Merkmalen des Patentanspruchs 1 gelöst.

Demgemäß erfolgt das Aktivieren einer Funktion eines Fahrzeugs, dem ein zum drahtlosen Datenaustausch mit diesem ausgebildeter Schlüssel zugeordnet ist, mit Hilfe eines von dem Schlüssel verschiedenen Telekommunikationsgeräts. Das Telekommunikationsgerät versucht, nach einem vorbestimmten Verfahren (z. B. über eine geeignete Datenschnittstelle wie etwa Bluetooth) in Kommunikationsverbindung mit dem Schlüssel zu treten und hierbei eine Information zu gewinnen. Die Funktion des Fahrzeugs wird nur aktiviert, wenn die so gewonnene Information einer Vergleichsinformation (nach einem vorbestimmten Kriterium) entspricht. Dabei wird mittels der Vergleichsinformation bestimmt, ob der Schlüssel der zuletzt benutzte Schlüssel ist, mit dem das Fahrzeug zuletzt bewegt wurde.

Die Erfindung beinhaltet somit, dass das Telekommunikationsgerät den Schlüssel sucht, insbesondere in seiner Umgebung, und auf diese Weise wird der Schlüssel in den Verfahrensablauf einbezogen. Alles, was bezüglich der Sicherheit durch den Schlüssel realisierbar ist, kann daher nunmehr auch durch das Telekommunikationsgerät umgesetzt werden.

Eine besonders bevorzugte Ausführungsform beinhaltet, dass das Telekommunikationsgerät zunächst die Vergleichsinformation von dem Fahrzeug einholt (also beispielsweise ein Mobilfunktelefon dieses anruft und in Antwort darauf die Vergleichsinformation erhält). Nach dem Gewinnen der Information bei oder durch Kommunikation mit dem Schlüssel sendet es dann ein Aktivierungssignal an das Fahrzeug, wenn die gewonnene Information der Vergleichsinformation entspricht.

Auf diese Weise ist durch die auf dem Telekommunikationsgerät implementierte Software für eine ausreichende Sicherheit gesorgt, sodass es nicht notwendig ist, auf dem Fahrzeug und/oder dem Schlüssel eine zu der Software des Telekommunikationsgeräts passende Software zu installieren, sofern die Grundfunktionalität des Austauschs von Daten gegeben sind. Die Verantwortung für das Verfahren liegt also im Bereich des Telekommunikationsgeräts, was komfortabel mit einer entsprechenden Software ("Applet") ausstattbar ist.

Alternativ zu dieser Ausführungsform ist es natürlich grundsätzlich auch möglich, dass das Telekommunikationsgerät zunächst eine Information durch Kommunikation mit dem Schlüssel gewinnt und diese zusammen mit einem Aktivierungssignal an das Fahrzeug weiterleitet. Anders als bei der zuvor geschilderten Ausführungsform bewirkt dieses Aktivierungssignal aber nicht unmittelbar ein Aktivieren einer Funktion, sondern das Fahrzeug vergleicht die weitergeleitete Information mit einer in einem Speicher des Fahrzeugs gespeicherten Vergleichsinformation. Bei Einander-Entsprechen der Informationen aktiviert sodann das Fahrzeug die Funktion selbsttätig. Hier ist es erforderlich, dass das Fahrzeug selbst mit einer Funktionalität ausgestattet ist, die das Empfangen von Informationen, das Vergleichen mit Vergleichsinformationen und das selbsttätige Aktivieren einer weiteren Funktionalität beinhaltet. Diese Ausführungsform ist aber vorteilhaft, wenn ein Automobilbauer bereits bestimmte Funktionalitäten sichtbar zur Verfügung stellen möchte.

Bei einer Ausführungsform der Erfindung kennzeichnet die gewonnene Information den Schlüssel als einen von mehreren Fahrzeugschlüsseln. In diesem Fall braucht der Schlüssel, wenn das Telekommunikationsgerät versucht, in Kommunikationsverbindung mit ihm zu treten, lediglich ein herkömmliches Antwortsignal abzugeben, das ihn identifiziert. Es muss keine gesonderte Information übermittelt werden. Diese Ausführungsform der Erfindung besticht durch ihre Einfachheit.

Andererseits ist es möglich, dass die gewonnene Information eine durch den Schlüssel übersandte Information ist, die nach dessen letztem Datenaustausch mit dem Fahrzeug auf diesem gespeichert war. Beispielsweise kann die übersandte Information den Zeitpunkt des letzten Zündungswechsels beinhalten, wann also das Fahrzeug zuletzt ein- oder ausgeschaltet wurde. Wird der auf dem Schlüssel abgespeicherte Zeitpunkt des Zündungswechsels mit dem im Kraftfahrzeug abgelegten Zeitpunkt des letzten Zündungswechsels verglichen, so kann vermieden werden, dass das Fahrzeug mit Hilfe eines anderen Schlüssels als dem zusammen mit dem Telekommunikationsgerät mitgeführten Schlüssel wegbewegt wurde.

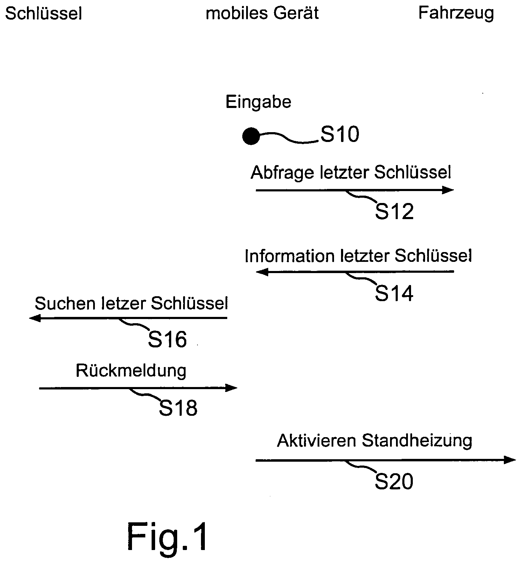

Nachfolgend werden Ausführungsformen des erfindungsgemäßen Verfahrens unter Bezug auf die Zeichnung näher beschrieben, in der
- Fig. 1: ein Schaubild zur Erläuterung der Schrittabfolge bei einer ersten Ausführungsform des erfindungsgemäßen Verfahrens ist, und

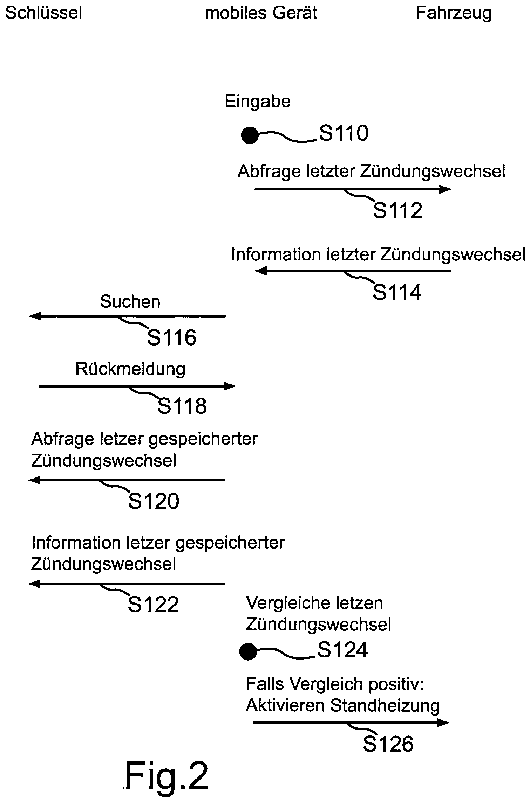

- Fig. 2: ein entsprechendes Schaubild zur Erläuterung einer Schrittabfolge bei einer zweiten Ausführungsform des erfindungsgemäßen Verfahrens ist.

Vorliegend ist von der Grundsituation ausgegangen, dass ein Fahrzeug mit Hilfe eines bestimmten Schlüssels bewegt wurde und anschließend abgestellt wurde. Der Fahrzeugführer nimmt den Schlüssel mit und führt gleichzeitig ein mobiles Gerät (Mobilfunktelefon) mit sich. Er begibt sich an einen Ort, der soweit von dem Fahrzeug entfernt ist, dass eine drahtlose Verbindung zwischen dem Schlüssel und dem Fahrzeug nicht herstellbar ist.

Vorliegend ist aber davon ausgegangen, dass das mobile Gerät mit dem Fahrzeug kommunizieren kann, insbesondere über ein Mobilfunknetz, und dass gleichzeitig das mobile Gerät mit dem Schlüssel kommunizieren kann, insbesondere über eine Bluetooth-Schnittstelle oder eine andere drahtlose Schnittstelle.

Die erste Ausführungsform des erfindungsgemäßen Verfahrens beginnt mit einer Eingabe in Schritt S10, durch die der Nutzer versucht, die Standheizung des Fahrzeugs zu aktivieren. Der Nutzer weiß, dass er das Fahrzeug auf einem Terrain abgestellt hat, auf dem die Standheizung sicher betrieben werden kann.

Nach der Eingabe in Schritt S10 sendet das mobile Gerät in Schritt S12 selbsttätig eine Abfrage an das Fahrzeug, um von diesem zu erfahren, was der zuletzt benutzte Schlüssel ist, mit dem eine Funktion an dem Fahrzeug aktiviert wurde. Das Fahrzeug erhält diese Abfrage und sendet selbsttätig in Schritt S14 die Information an das mobile Gerät, was der zuletzt benutzte Schlüssel war. Die Information wird beispielsweise in Form eines Schlüsselcodes wiedergegeben, der auch für die Kommunikationsschnittstelle zwischen dem mobilen Gerät und dem Schlüssel einsetzbar ist. Das mobile Gerät sucht dann in Schritt S16 den letztbenutzten Schlüssel. Es genügt, dass der Schlüssel in Schritt S18 eine Rückmeldung gibt, damit klar ist, dass sich im Bereich des mobilen Geräts genau der Schlüssel befindet, mit dem das Fahrzeug zuletzt bewegt wurde. Damit ist aber klar, dass das Fahrzeug nicht von dem Terrain wegbewegt wurde, auf dem es der Nutzer abgestellt hat. In Schritt S20 aktiviert daher das mobile Netzwerk selbsttätig die Standheizung des Fahrzeugs. Im Fahrzeug findet keine weitere Überprüfung des Aktivierungssignals statt.

Bei einer zweiten Ausführungsform der Erfindung erfolgt in Schritt S110 eine Eingabe durch den Nutzer, dergemäß die Standheizung zu aktivieren sei. Das mobile Gerät fragt nun beim Fahrzeug in einer Abfrage in Schritt S112 ab, wann der Zeitpunkt des letzten Zündungswechsels war. Solange das Fahrzeug nicht von jemand anderem bewegt wurde, ist dies der Zeitpunkt, zu dem die Zündung des Fahrzeugs von dem vorliegenden Nutzer abgestellt wurde.

Das Fahrzeug übersendet selbsttätig in Schritt S114 die Information über den letzten Zündungswechsel.

Das mobile Gerät sucht nun allgemein nach (Fahrzeug-)Schlüsseln oder konkret nach einem bestimmten Schlüssel, dessen Code in ihm abgelegt ist, siehe Schritt S116. Es erhält sodann eine Rückmeldung in Schritt S118 von dem Schlüssel, sodass eine Kommunikationsverbindung zwischen dem Schlüssel und dem mobilen Gerät hergestellt ist. Anschließend sendet das mobile Gerät in Schritt S120 selbsttätig eine Abfrage nach dem im Schlüssel gespeicherten Zündungswechsel. Hier ist vorausgesetzt, dass bei jedem Zündungswechsel der entsprechende Zeitpunkt im Schlüssel abgelegt wird. Die Information über den zuletzt gespeicherten Zündungswechsel wird in Schritt S122 dann von dem Schlüssel an das mobile Gerät übersandt. Dieses kann nun die beiden Informationen, die es vom Fahrzeug einerseits und vom Schlüssel andererseits erhalten hat, in Schritt S124 miteinander vergleichen. Stimmen die genannten Zündungswechsel miteinander überein, bedeutet dies, dass das Fahrzeug nicht mit Hilfe eines anderen Schlüssels bewegt wurde, dass also kein weiterer Zündungswechsel mehr stattfand. Daher ist gewährleistet, dass das Fahrzeug auf genau dem Terrain steht, auf dem es sein Nutzer abgestellt hat. In Schritt S126 kann somit die Standheizung aktiviert werden, und zwar bewirkt dies das mobile Gerät selbsttätig, und das Fahrzeug reagiert lediglich darauf.

Das Verfahren in den geschilderten Ausführungsformen wird durch das mobile Gerät ausgelöst und durchgeführt. Dies hat den Vorteil, dass durch eine Implementierung geeigneter Software auf dem mobilen Gerät ("Applet") die Durchführung des Verfahrens ermöglicht wird. Alternativ hierzu ist es möglich, einige der Verfahrensschritte durch das Fahrzeug durchführen zu lassen. Es würde dann zwar eine Eingabe an dem mobilen Gerät erfolgen müssen, und auch die Kommunikation mit dem Schlüssel würde durch das mobile Gerät bewirkt, andere Schritte, wie etwa der Vergleich zwischen eingeholten Informationen, könnten dann aber im Fahrzeug selbst durchgeführt werden.

## Patentansprüche

1. Verfahren zum Aktivieren einer Funktion eines Fahrzeugs, dem ein zum drahtlosen Datenaustausch mit diesem ausgebildeter Schlüssel zugeordnet ist, mit Hilfe eines von dem Schlüssel verschiedenen Telekommunikationsgeräts, wobei das Telekommunikationsgerät versucht, nach einem vorbestimmten Verfahren in Kommunikationsverbindung mit dem Schlüssel zu treten und hierbei eine Information zu gewinnen, und wobei die Funktion des Fahrzeugs mit Hilfe des Telekommunikationsgeräts über ein Mobilfunknetz durch Fernaktivierung nur aktiviert wird, wenn die so gewonnene Information einer Vergleichsinformation entspricht,
**dadurch gekennzeichnet, dass** mittels der Vergleichsinformation bestimmt wird, ob der Schlüssel der zuletzt benutzte Schlüssel ist, mit dem das Fahrzeug zuletzt bewegt wurde.

2. Verfahren nach Anspruch 1,
**dadurch gekennzeichnet, dass**
das Telekommunikationsgerät zunächst die Vergleichsinformation von dem Fahrzeug einholt (S12, S112) und nach dem Gewinnen der Information bei oder durch Kommunikation mit dem Schlüssel ein Aktivierungssignal (S20, S126) an das Fahrzeug sendet, wenn die so gewonnene Information der Vergleichsinformation entspricht.

3. Verfahren nach Anspruch 1,
**dadurch gekennzeichnet, dass**
das Telekommunikationsgerät zunächst eine Information durch oder bei Kommunikation mit dem Schlüssel gewinnt und diese zusammen mit einem Aktivierungssignal an das Fahrzeug weiterleitet, wobei das Fahrzeug die weitergeleitete Information mit einer in einem Speicher des Fahrzeugs gespeicherten Vergleichsinformation vergleicht und bei Einander-Entsprechen der Informationen dann die Funktion selbsttätig aktiviert.

4. Verfahren nach einem der Ansprüche 1 bis 3,
**dadurch gekennzeichnet, dass**
die gewonnene Information den Schlüssel als einen von mehreren Fahrzeugschlüsseln kennzeichnet.

5. Verfahren nach einem der Ansprüche 1 bis 3,
**dadurch gekennzeichnet, dass**
die gewonnene Information eine durch den Schlüssel übersandte Information ist, die bei dessen letztem Datenaustausch mit dem Fahrzeug von dem Fahrzeug auf den Schlüssel übertragen wurde und nachfolgend auf dem Schlüssel gespeichert war.

## Claims

1. Method to activate a function of a vehicle, to which a key formed for wireless data exchange with this is allocated, with the aid of a telecommunication device distinct from the key, wherein the telecommunication device attempts, according to a predetermined process, to communicate with the key and herein to obtain a piece of information, and wherein the function of the vehicle is only activated with the aid of the telecommunication device via a mobile network by remote activation if the thus obtained piece of information corresponds to a piece of comparative information, **characterised in that** it is determined by means of the piece of comparative information whether the key is the last used key with which the vehicle was last moved.

2. Method according to claim 1,
**characterised in that**
the telecommunication device firstly gathers the piece of comparative information from the vehicle (S12, S112) and, after obtaining the piece of information during or by communication with the key, sends an activation signal (S20, S126) to the vehicle if the thus obtained piece of information corresponds to the piece of comparative information.

3. Method according to claim 1,
**characterised in that**
the telecommunication device firstly obtains a piece of information by or during communication with the key and transmits this together with an activation signal to the vehicle, wherein the vehicle compares the transmitted piece of information with a piece of comparative information stored in a storage device of the vehicle and then activates the function automatically in the case that the pieces of information correspond to each other.

4. Method according to any one of claims 1 to 3,
**characterised in that**
the obtained piece of information marks the key as one of several vehicle keys.

5. Method according to any one of claims 1 to 3,
**characterised in that**
the obtained piece of information is a piece of information transmitted by the key, which was transferred during the last data exchange thereof with the vehicle from the vehicle to the key and was then stored on the key.

## Revendications

1. Procédé d'activation d'une fonction d'un véhicule, auquel est associée une clé réalisée pour l'échange de données sans fil avec ledit véhicule, à l'aide d'un appareil de télécommunication différent de la clé, lequel appareil de télécommunication essaie d'entrer en communication avec la clé selon un procédé prédéterminé et d'obtenir ainsi une information et laquelle fonction du véhicule n'est activée par activation à distance à l'aide de l'appareil de télécommunication par l'intermédiaire d'un réseau de télécommunication mobile que si l'information ainsi obtenue correspond à une information de comparaison,
**caractérisé en ce que** l'on détermine au moyen de l'information de comparaison si la clé est la dernière clé utilisée avec laquelle le véhicule a été déplacé pour la dernière fois.

2. Procédé selon la revendication 1,
**caractérisé en ce que**
l'appareil de télécommunication récupère (S12, S112) d'abord l'information de comparaison auprès du véhicule et, après l'obtention de l'information lors de la communication ou par la communication avec la clé, envoie (S20, S126) un signal d'activation au véhicule si l'information ainsi obtenue correspond à l'information de comparaison.

3. Procédé selon la revendication 1,
**caractérisé en ce que**
l'appareil de télécommunication obtient d'abord une information par la communication ou lors de la communication avec la clé et transmet celle-ci conjointement à un signal d'activation au véhicule, lequel véhicule compare alors l'information retransmise à une information de comparaison mémorisée dans une mémoire du véhicule et active ensuite lui-même la fonction lorsque les informations correspondent l'une à l'autre.

4. Procédé selon l'une quelconque des revendications 1 à 3,
**caractérisé en ce que**
l'information obtenue caractérise la clé comme une clé de véhicule parmi plusieurs clés de véhicule.

5. Procédé selon l'une quelconque des revendications 1 à 3,
**caractérisé en ce que**
l'information obtenue est une information transmise par la clé qui a été transmise par le véhicule sur la clé lors de son dernier échange de données avec le véhicule et qui a ensuite été mémorisé sur la clé.
